# EUROPÄISCHE PATENTSCHRIFT

(11) **EP 2 853 325 B1**
(45) Veröffentlichungstag und Bekanntmachung des Hinweises auf die Patenterteilung: **18.12.2019**
(21) Anmeldenummer: 14189516.9
(22) Anmeldetag: 12.08.2011
(51) Int. Cl.: B23B 31/163

(54) **System aus einem automatisiert koppelbarem Spannfutter, einem Antriebsmotor und einer Austauscheinrichtung.**
System consisting of a chuck that can be coupled in an automated manner, a drive motor and a replacement means
Système d'un mandrin de serrage à couplage automatique, d'un moteur d'entraînement et un dispositif de changement

(30) Priorität: 23.08.2010 DE 102010035150
(43) Veröffentlichungstag der Anmeldung: 01.04.2015
(62) Teilanmeldung aus: 11745757.2
(73) Patentinhaber: EV Group GmbH, 4782 St. Florian am Inn (AT)
(72) Erfinder: Tiefenböck, Wolfgang, 94575 Windorf (DE); Tiefenböck, Herbert, 4770 Andorf (AT)
(74) Vertreter: Schweiger, Johannes

(56) Entgegenhaltungen:
- WO-A1-99/51380
- JP-A- 2001 225 215
- JP-U- S52 146 776

## Beschreibung

Die vorliegende Erfindung betrifft ein System aus einem Spannfutter zum Einspannen von Werkstücken oder Werkzeugen, einem Antriebsmotor sowie einer Austauscheinrichtung zum Austauschen des Spannfutters.

Die Druckschrift JP S52146776 betrifft ein Drehfutter zum Einspannen von Werkstücken.

Spannfutter dienen in der Werkzeugtechnik, insbesondere beim Drehen und Fräsen zur Aufnahme unterschiedlicher Werkstücke oder Werkzeuge in den von Spannbacken des Spannfutters gebildeten Einspannraum. Werkzeuge können beispielsweise Fräsköpfe oder Bohrer sein, die in Magazinen gelagert und automatisiert aus dem jeweiligen Magazin entnommen und computergesteuert im Spannfutter eingespannt werden, um beispielsweise am gleichen Bauteil unterschiedliche Prozessschritte durchführen zu können.

Insbesondere bei nicht hydraulisch oder pneumatisch betriebenen Spannfuttern ist es in regelmäßigen Abständen erforderlich, das Spannfutter auszutauschen, beispielsweise wenn das Spannfutter nicht mehr mit der notwendigen Präzision arbeitet oder die Dimension des Spannfutters nicht für den Einsatz geeignet ist. Im Spannfutter werden Werkzeuge oder Maschinenbauteile oder das zu bearbeitende Werkstück im Zentrum des Drehfutters in einem durch Stirnseiten von Spannbacken des Spannfutters gebildeten Einspannraum zentral eingespannt.

Dabei haben beispielsweise hydraulische und pneumatische Spannfutter den Vorteil, dass sie automatisch und schnell schaltbar sind. Die mit hydraulischen und pneumatischen Spannfuttern erreichbaren Spannwege der Spannbacken sind vergleichsweise klein, beispielsweise nur +/- 10mm, so dass der kleinste und größte Durchmesser des Einspannraums, der für die Variabilität des Spannfutters steht, begrenzt ist. Allenfalls durch Umsetzen oder Austauschen der Spannbacken kann das Spannfutter größere Werkzeuge oder Werkstücke aufnehmen.

Dafür ist die erreichbare Spannkraft bei solchen Spannfuttern sehr groß. Um also Werkzeuge oder Werkstücke mit verschiedenen Abmessungen, insbesondere verschiedenem Durchmesser aufnehmen zu können, muss entweder das Spannfutter ausgetauscht oder die Spannbacken versetzt werden.

Spannfutter sind beispielsweise Spannkopffutter, Bohrfutter, Drehfutter oder Schrumpfspannfutter.

Darüber hinaus erfolgt das Austauschen der Spannfutter meist manuell, wobei ein Facharbeiter die Werkzeugmaschine anhält, öffnet, und die Backen des Spannfutters öffnet, das Werkstück entfernt und anschließend das Spannfutter gegen ein neues Spannfutter austauscht.

Es ist daher die Aufgabe der vorliegenden Erfindung, ein Spannfutter vorzusehen, das effizienter einsetzbar ist, insbesondere hohe Spannkraft erreicht, weite Spannwege und gleichzeitig eine möglichst kompakte Bauweise aufweist.

Das der Erfindung zugrunde liegende technische Problem wird mit den Merkmalen der nebengeordneten Ansprüche gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart und in beliebiger Kombination beanspruchbar sein.

Der Erfindung liegt der Gedanke zugrunde, das Spannfutter, insbesondere durch Auslagerung von Kraftmessmitteln und/oder Wegmessmitteln und/oder sonstiger elektrischer Bauteile, die den Zustand des Spannfutters bestimmen, derart vorzusehen, dass das Spannfutter zum einen automatisiert austauschbar ausgebildet ist beziehungsweise ausschließlich zur Übertragung des Antriebsmoments vom Antriebsmotor auf die Spannbacken dient. Ein weiterer, alternativ oder kumulativ hierzu vorgesehener Lösungsansatz liegt darin, dass durch ein in das Innere des Spannfutters verlegtes Getriebe und einen daran automatisiert anschließbaren Antriebsmotor allein durch den Antriebsmotor und die vom Antriebsmotor über das Getriebe ausgeführte Bewegung der Spannbacken eine Bewegung von der maximalen Größe des Einspannraums bis zur minimalen Größe des Einspannraums ausführbar ist. Das Spannfutter ist somit flexibler für eine größere Zahl an Werkstücken einsetzbar.

Insbesondere ist vorgesehen, dass das Getriebe zwischen dem Antriebsmotor und einem unmittelbar die Spannbacken antreibenden Spannbackenantrieb, insbesondere einem Spiralring, rein mechanisch und/oder rein formschlüssig ausgebildet ist. Am Spannbackenantrieb kann zusätzlich für eine Feinverstellung der Spannbacken beziehungsweise jedes Spannbackens zusätzlich ein hydraulischer oder pneumatischer Antrieb vorgesehen sein. Der zusätzliche Antrieb ist insbesondere Vorteilhaft für kleine Stellwege der Spannbacken, während das Getriebe mit seinem Spannbackenantrieb für vergleichsweise große Verstellwege von mindestens 1cm, insbesondere mindestens 2cm, vorzugsweise mindestens 5cm vorgesehen ist.

Der Einspannraum ist definiert durch die Zahl der Spannbacken und dient zur Aufnahme von Werkstücken und/oder Werkzeugen mit unterschiedlicher Außenkontur in einem Einspannabschnitt der Werkzeuge/Werkstücke. Meist ist der Einspannabschnitt als polygonaler Zylinderabschnitt an einem Einspannende des Werkzeugs/Werkstücks vorgesehen. Die Spannbacken spannen das Werkzeug/Werkstück an der Mantelfläche des Einspannabschnitts ein, indem die Spannbacken mit der durch den Antriebsmotor vorgesehenen Spannkraft F von mindestens zwei, meist drei oder vier Seiten auf die Mantelfläche drücken, wodurch ein Kraftschluss zwischen dem Spannfutter und dem Werkzeug/Werkstück entsteht.

Erfindungsgemäß ist vorgesehen, dass die Spannbacken entlang der Einspannebene E translatorisch durch einen an jedem Spannbacken, insbesondere integral, vorgesehenen Antrieb, insbesondere Führungsnuten, von einer Maximalposition bis zu einer Minimalposition des Spannbackens an dem jeweiligen Spannfutter bewegbar sind, so dass auf ein Versetzen des Spannbackens, wie es beispielsweise bei hydraulisch oder pneumatisch bewegbaren Spannbacken erforderlich ist, verzichtet werden kann. Die Spannbacken sind also ohne Versetzen über den gesamten, von den Spannbacken am jeweiligen Spannfutter vorgesehenen Spannweg bewegbar.

Durch die Auslagerung bisher in Spannfuttern implizierter funktionaler Bauteile werden nicht nur die Kosten für das Spannfutter reduziert, sondern die Funktion des Spannfutters auf das Wesentliche reduziert, nämlich das präzise Einspannen und Fixieren von Werkstücken oder Werkzeugen, um es gegen Verschiebung und/oder Rotation zu sichern. Die vorliegende Erfindung eignet sich besonders für Dreh- oder Fräsfutter. Von besonderem Vorteil ist es dabei gemäß einer Ausführungsform der Erfindung, wenn das Spannfutter rein mechanisch ausgeführt ist, da dies einerseits die Fertigung des Spannfutters vereinfacht und die Zuverlässigkeit des Spannfutters erhöht.

Indem eine Öffnungsweite D zwischen mindestens zwei der Spannbacken und/oder die Spannkraft F direkt durch den, insbesondere als Servomotor ausgebildeten, Antriebsmotor einstellbar sind, wird die Steuerung/Regelung des Spannfutters beim Einspannen von Werkstücken oder Werkzeugen unmittelbar vom Antriebsmotor erledigt, ohne dass zusätzliche Sensoren oder Messmittel notwendig wären. Der Antriebsmotor kann dabei insbesondere momentengeregelt und/oder positionsgeregelt sein, wobei eine Kalibrierung des Servomotors und des im Servomotor vorhandenen geschlossenen Regelkreises auf das jeweilige Spannfutter erforderlich ist. Auf diese Weise ist eine besonders einfache, effiziente und sehr genaue Steuerung/Regelung des Spannfutters möglich.

Erfindungsgemäß ist vorgesehen, dass der Einspannraum auf einer Vorderseite des Spannfutters und die Koppelmittel auf einer von der Vorderseite abgewandten Rückseite des Spannfutters vorgesehen sind. Diese Ausgestaltung erleichtert den Wechsel und Einsatz des Spannfutters und ermöglicht eine platzsparende Bauweise. Soweit die Koppelmittel eine, insbesondere federnd gelagerte, Keilwelle mit einem an der Rückseite liegenden, formschlüssig wirkenden Koppelelement, insbesondere einer an der Antriebsseite der Keilwelle vorgesehenen Innenverzahnung, zum formschlüssigen Eingriff in ein korrespondierendes Koppelelement einer Motorwelle eines Antriebsmotors aufweist, wird die Kopplung durch Aufsetzen des Spannfutters auf das korrespondierende Koppelelement ermöglicht.

Erfindungsgemäß ist vorgesehen, dass die Koppelmittel mechanische Ausrichtmittel zur selbsttätigen Ausrichtung beim Koppeln des Spannfutters mit dem Antriebsmotor aufweisen, insbesondere in Form mindestens einer, vorzugsweise einer die Keilwelle umgebenden, insbesondere umfangsgeschlossenen und/oder ringförmigen, Anlaufschräge. Durch diese Maßnahme wird der Kopplungsvorgang sicherer und das Koppelelement sowie das korrespondierende Koppelelement geschont.

Indem die Motorwelle des Antriebsmotors federnd gelagert ist, kann bei Versatz des Koppelelements mit dem korrespondierenden Koppelelement die Einkopplung nach dem Start des Antriebsmotors erfolgen, indem durch die Bewegung des Antriebs der Versatz zwischen dem Koppelelement und dem korrespondierenden Koppelelement gelöst wird und durch die Federkraft das korrespondierende Koppelelement in das Koppelelement eingreift.

Erfindungsgemäß ist gemäß einer Ausführungsform außerdem vorgesehen, dass das Getriebe mindestens zwei Wellen mit je einer Antriebs- und einer Abtriebsseite aufweist. Weiterhin ist es mit Vorteil denkbar, dass mindestens zwei der Wellen eine unterschiedlich, insbesondere orthogonal, zueinander ausgerichtete Rotationsrichtung aufweisen. Gemäß einer weiteren Ausführungsform der Erfindung ist es vorgesehen, dass mindestens eine der Wellen, insbesondere die Antriebswelle, zu einer Längsachse L des Spannfutters parallel verläuft, insbesondere mit dieser zusammenfällt.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1: eine Schnittansicht einer ersten Ausführungsform eines erfindungsgemäßen Spannfutters und einer Spannfutteraufnahme und
- Fig. 2: eine zweite Ausführungsform eines erfindungsgemäßen Spannfutters und einer Spannfutteraufnahme.

In den Figuren sind gleiche beziehungsweise gleich wirkende Bauteile mit den gleichen Bezugszeichen versehen.

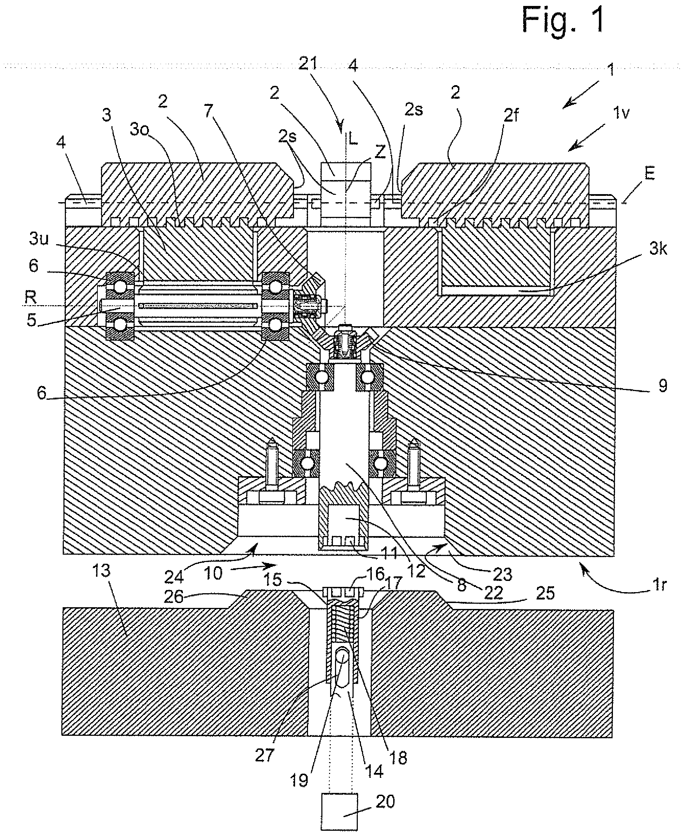

Figur 1 zeigt oben ein Spannfutter 1, das auf einer darunter gezeigten Spannfutteraufnahme 13 aufnehmbar ist, um das Spannfutter 1 mit einem an der Welle angeschlossenen Antriebsmotor 20 zu koppeln.

Das Spannfutter 1 besitzt an seiner Vorderseite lv mehrere Spannbacken 2, die durch einen unterhalb der Spannbacken 2 angeordneten Spiralring 3 linear beziehungsweise translatorisch entlang einer Einspannebene E bewegbar sind. Der Spiralring 3 greift dabei mit einer an seiner Oberfläche 3o angeordneten Spirale 3s in korrespondierende Führungsnuten 2f der Spannbacken ein. Die Spannbacken 2 sind durch Linearführungen 4 linear geführt.

An einer Unterseite 3u des Spiralrings 3 befindet sich eine Kronenverzahnung 3k, die sich über den gesamten Umfang des Spiralrings 3 an dessen Unterseite 3u erstreckt. Die Kronenverzahnung 3k des Spiralrings 3 ist Bestandteil eines rein mechanischen Getriebes zur Übertragung eines Antriebsmoments des mit dem Getriebe koppelbaren Antriebsmotors 20 auf die Spannbacken 2. Weiterhin ist Bestandteil des Getriebes eine als Abtriebswelle wirkende Keilwelle 5, die in die Kronenverzahnung 3k des Spiralrings 3 eingreift, um den Spiralring 3 in Rotation zu versetzen. Durch die Rotation des Spiralrings 3 werden die Spannbacken 2 gleichförmig translatorisch bewegt.

Antriebsseitig weist die Keilwelle 5 ein Kegelzahnrad 7 auf und die Keilwelle 5 ist in einem Kugellager 6 gelagert, was die ideale Lagerungsweise darstellt. Einfachere Ausführungen sehen als Lager beispielsweise Reiblager vor. Die Rotationsachse R der Keilwelle 5 liegt parallel zur Einspannebene E und über ein weiteres, in das Kegelzahnrad 7 der Keilwelle 5 eingreifendes Kegelzahnrad 9 einer Antriebswelle 8 wird die Antriebsdrehbewegung in eine Längsachse L des Spannfutters 1 transformiert, die bei der vorliegenden Ausführungsform orthogonal zur Rotationsachse R beziehungsweise zur Einspannebene E und darüber hinaus im Zentrum des Spannfutters 1 liegt, das hier mit dem Zentrum Z des Einspannraums 21 zusammenfällt. Die Rotationsachse der Antriebswelle 8 fällt mit der Längsachse L zusammen.

Die Antriebswelle 8 ist wiederum kugelgelagert und weist antriebsseitig eine in einer Bohrung 12 vorgesehene Innenverzahnung 11 auf, die im Inneren des Spannfutters 1 angeordnet ist.

Die Antriebswelle 8 endet antriebsseitig in einer Ausnehmung 24, die zumindest teilweise als Ausrichtmittel 22 zur selbsttätigen Ausrichtung beim Koppeln des Spannfutters 1 mit dem Antriebsmotor 20 beziehungsweise der Spannfutteraufnahme 13 dient. Hierzu ist eine die Antriebswelle 8 umgebende ringförmige Anlaufschräge 23 vorgesehen, die mit einer korrespondierenden, ringförmigen Anlaufschräge 25 eines Vorsprungs 26 in Form einer Nut-Feder-Verbindung als Ausrichtmittel 22 beim Koppeln wirkt.

Eine Kupplung 10 zwischen dem Spannfutter 1 und dem Antriebsmotor 20 beziehungsweise der Spannfutteraufnahme 13 weist nicht nur die in der Bohrung 12 vorgesehene Innenverzahnung 11, sondern auch eine an einem Koppelelement 15 vorgesehene Kopfverzahnung 16 auf, die an der Motorwelle 14 vorgesehen sind. Die Motorwelle 14 weist als Koppelanschluss weiterhin neben dem Koppelelement 15 und der Kopfverzahnung 16 eine Hülse 17 auf, an der die Kopfverzahnung 16 vorgesehen ist und die als Koppelelement 15 dient. In der Hülse 17 ist eine Spiralfeder 18 geführt, gegen deren Federkraft sich die Motorwelle 14 abstützt. Die maximale Bewegung der Hülse 17 gegenüber der Motorwelle 14 wird durch einen Stift 19 begrenzt, der in einem Langloch 27 geführt ist.

Die Motorwelle 14 wird durch den Servomotor 20 angetrieben.

Der Servomotor 20 treibt damit einerseits die Motorwelle 14, über die Kupplung 10, die Antriebswelle 8 und die daran gekoppelte Keilwelle 5 und somit den Spiralring 3 sowie die Spannbacken 2 an. Andererseits kann über den Servomotor kontinuierlich Strom und Spannung ausgelesen werden, so dass bei Widerstand an den Spannbacken 2 durch ein Werkstück über die Leistung des Servomotors 20 beziehungsweise die Änderung der Strom- und/oder Spannungskurve eine Steuerung/Regelung der Spannkraft F nach vorheriger Kalibrierung des Servomotors 20 auf das Spannfutter 1 ermöglicht wird. Statt eines Servomotors 20 ist auch ein Antriebsmotor verwendbar, der über eine mechanische/elektrische Rückkopplung verfügt.

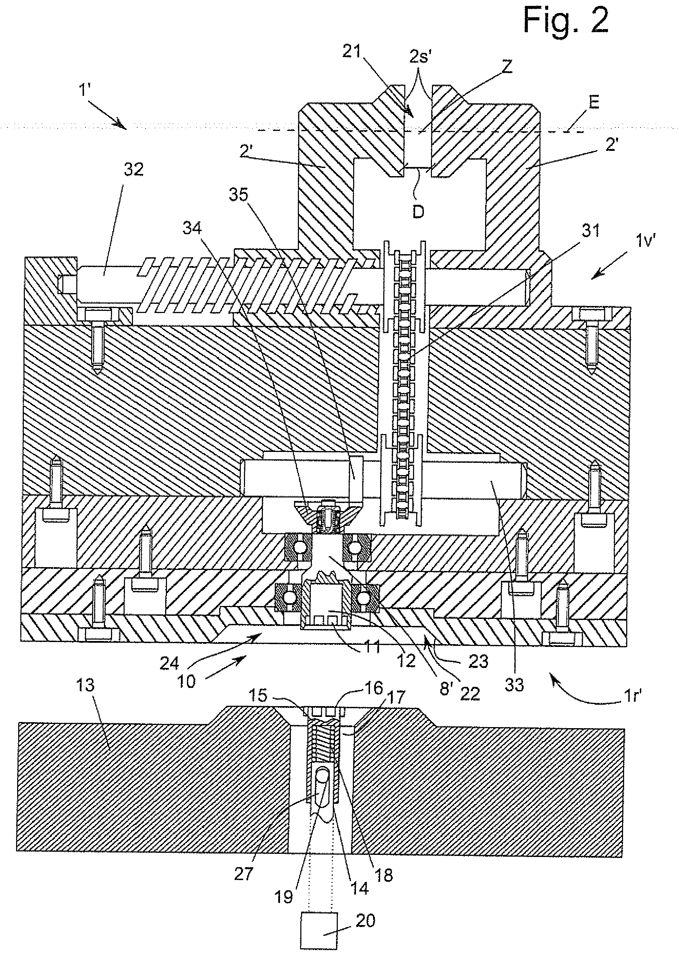

In der Figur 2 ist ein Spannfutter 1' eines Schraubstocks gezeigt, der über zwei Spannbacken 2' verfügt, zwischen deren Stirnseiten 2s' und die Öffnungsweite D der Einspannraum 21 gebildet wird, in dem Werkstücke einspannbar sind. Eine translatorische Bewegung der Spannbacken 2' entlang der Einspannebene E erfolgt über eine Spindel 32, die abtriebsseitig einen der beiden Spannbacken 2' translatorisch bewegt, sobald die Spindel 32 rotiert. Die Rotation der Spindel 32 erfolgt durch einen mit der Spindel 32 gekoppelten Kettentrieb 31 abtriebsseitig, wobei der Kettentrieb 31 antriebsseitig durch eine Welle 33 angetrieben wird. Die Welle 33 wird wiederum durch ein Kegelzahnrad 34 an einem Zahnrad 35 der Welle 33 angetrieben. Das Kegelzahnrad 34 befindet sich abtriebsseitig auf einer Antriebswelle 8', die antriebsseitig analog der in Figur 1 gezeigten Ausführungsform ausgebildet ist.

Die Spannfutteraufnahme 13 und der Antriebsmotor 20 sowie die Kupplung 10 sind identisch wie in der ersten Ausführungsform, ausgebildet.

Beiden Ausführungsformen gemäß Figur 1 und 2 ist außerdem gemein, dass die Außenkonturen der Spannfutteraufnahme 13 und des Spannfutters 1 fluchten, so dass von außen sofort erkennbar ist, wenn das Spannfutter 1 nicht richtig auf der Spannfutteraufnahme 13 sitzt.

Zum Austauschen des Spannfutters 1 eignet sich insbesondere ein Roboterarm.

**Bezugszeichenliste**

| | | | |
|---|---|---|---|
| 1, 1' | Spannfutter | 19 | Stift |
| 1v, 1v' | Vorderseite | 20 | Servomotor |
| 1r, 1r' | Rückseite | 21 | Einspannraum |
| 2, 2' | Spannbacken | 22 | Ausrichtmittel |
| 2s, 2s' | Stirnseite | 23 | Anlaufschräge |
| 2f | Führungsnuten | 24 | Ausnehmungen |
| 3 | Spiralring | 25 | Anlaufschräge |
| 3o | Oberseite | 26 | Vorsprung |
| 3k | Kronenverzahnung | 27 | Langloch |
| 3s | Spirale | 31 | Kettentrieb |
| 4 | Linearführungen | 32 | Spindel |
| 5 | Keilwelle | 33 | Welle |
| 6 | Kugellager | 34 | Kegelzahnrad |
| 7 | Kegelzahnrad | 35 | Zahnrad |
| 8, 8' | Antriebswelle | E | Einspannebene |
| 9 | Kegelzahnrad | F | Spannkraft |
| 10 | Kupplung | D | Öffnungsweite |
| 11 | Innenverzahnung | Z | Zentrum |
| 12 | Bohrung | R | Rotationsachse |
| 13 | Spannfutteraufnahme | L | Längsachse |
| 14 | Motorwelle | | |
| 15 | Koppelelement | | |
| 16 | Kopfverzahnung | | |
| 17 | Hülse | | |
| 18 | Feder | | |

## Patentansprüche

1. System aus einem Spannfutter (1, 1') zum Einspannen von Werkstücken oder Werkzeugen in einem Einspannraum (21) mit einer Spannkraft (F) und einem Antriebsmotor (20) sowie einer Austauscheinrichtung zum Austauschen des Spannfutters (1, 1'), das Spannfutter (1, 1') mit:
- mindestens zwei translatorisch entlang einer Einspannebene (E) in Richtung eines Zentrums Z des Einspannraums (21) bewegbaren Spannbacken (2, 2'), wobei der Einspannraum (21) durch Stirnseiten (2s, 2s') der Spannbacken (2, 2') gebildet ist und
- einem zumindest überwiegend im Inneren des Spannfutters (1) angeordneten rein mechanischen Getriebe zur Übertragung eines Antriebsmoments des mit dem Getriebe durch Koppelmittel des Getriebes koppelbaren Antriebsmotors (20) auf die Spannbacken (2, 2') zur Bewegung der Spannbacken (2, 2'),
wobei der Einspannraum (21) allein durch den Antriebsmotor (20) und die vom Antriebsmotor (20) über das Getriebe ausgeführte Bewegung von der maximalen Größe des Einspannraums (21) bis zur minimalen Größe des Einspannraums (21) verstellbar ist, **dadurch gekennzeichnet, dass** die Koppelmittel automatisiert mit einem korrespondierenden Koppelanschluss des Antriebsmotors (20) koppelbar sind,
wobei die Koppelmittel mechanische Ausrichtmittel in Form einer die Antriebswelle (8) umgebende Anlaufschräge (23) zur selbsttätigen Ausrichtung beim Koppeln des Spannfutters (1) mit dem Antriebsmotor (20) aufweisen, wobei die Anlaufschräge (23) mit einer korrespondierenden Anlaufschräge (25) des Koppelanschlusses des Antriebsmotors (20) in Form einer Nut-Feder-Verbindung beim Koppeln wirkt.

2. System nach Anspruch 1, wobei die, insbesondere rein formschlüssigen Koppelmittel, insbesondere das Spannfutter (1, 1'), rein mechanisch ausgeführt sind.

3. System nach einem der vorhergehenden Ansprüche, wobei eine Öffnungsweite (D) zwischen mindestens zwei der Spannbacken (2, 2') durch den, insbesondere als Servomotor ausgebildeten, Antriebsmotor einstellbar ist.

4. System nach einem der vorhergehenden Ansprüche, wobei die Spannkraft (F) direkt durch den, insbesondere als Servomotor ausgebildeten, Antriebsmotor (20) einstellbar ist.

5. System nach einem der vorhergehenden Ansprüche, wobei der Einspannraum (21) auf einer Vorderseite (1v, 1v') des Spannfutters (1, 1') und die Koppelmittel auf einer von der Vorderseite (1v, 1v') abgewandten Rückseite (1r) des Spannfutters (1, 1') vorgesehen sind.

6. System nach einem der vorhergehenden Ansprüche, wobei die Koppelmittel eine, insbesondere federnd gelagerte, Antriebswelle (8, 8') mit einem an der Rückseite (1r) liegenden, formschlüssig wirkenden Koppelelement, insbesondere einer an der Antriebsseite der Antriebswelle (8, 8') vorgesehenen Innenverzahnung (11), zum formschlüssigen Eingriff in ein korrespondierendes Koppelelement (15) einer Motorwelle (14) des Antriebsmotors (20) aufweisen.

7. System nach einem der vorhergehenden Ansprüche, wobei die Anlaufschräge (23) umfangsgeschlossen und/oder ringförmig ausgebildet ist.

8. System nach Anspruch 1, wobei die Austauscheinrichtung ein Roboterarm ist.

9. System nach Anspruch 1, wobei die Motorwelle (14) federnd gelagert ist.

## Claims

1. A system of a chuck (1, 1') for clamping of workpieces or tools in a clamping space (21) with a clamping force (F) and a drive motor (20), as well as a replacement means for replacing the chuck (1, 1'), the chuck (1, 1') having:
- at least two chuck jaws (2, 2') which can move in translation along one clamping plane (E) in the direction of one center Z of the clamping space (21), the clamping space (21) being formed by faces (2s, 2s') of the chuck jaws (2, 2') and
- a purely mechanical gear train which is located at least largely within the chuck (1) for transfer of a driving torque of the drive motor (20), which can be coupled with the gear train by coupling means of the gear train, to the chuck jaws (2, 2') for moving the chuck jaws (2, 2'),
wherein the clamping space (21) is displaceable solely by the drive motor (20) and the movement from the maximum size of the clamping space (21) to the minimum size of the clamping space (21) which is executed by the drive motor (20) via the gear train, **characterized in that** the coupling means are able to be coupled by automation with the corresponding coupling connection of the drive motor (20),
wherein the coupling means comprise mechanical alignment means in the form of an approach bevel (23), which surrounds the drive shaft (8), for the automatic alignment during coupling of the chuck (1) with the drive motor (20), wherein the approach bevel (23) interacts with a corresponding approach bevel (25) of the coupling connection of the drive motor (20) in the form of a tongue- and-groove connection during coupling.

2. The system as claimed in claim 1, wherein the in particular purely form-fit coupling means, in particular the chuck (1, 1'), are constituted purely mechanical.

3. The system as claimed in one of the preceding claims, wherein an opening width (D) between at least two of the chuck jaws (2, 2') is adjustable by the drive motor which is made especially as a servomotor.

4. The system as claimed in one of the preceding claims, wherein the clamping force (F) is directly adjustable by the drive motor (20) which is made especially as a servomotor.

5. The system as claimed in one of the preceding claims, wherein there is a clamping space (21) on a front (1v, 1v') of the chuck (1, 1') and there are coupling means on a back (1r) of the chuck (1, 1') facing away from the front (1v, 1v').

6. The system as claimed in one of the preceding claims, wherein the coupling means comprise an, in particular elastically mounted, drive shaft (8, 8') with a coupling element lying at the back (1r) and acting in a form-fit manner, in particular an internal toothing (11) provided on the drive side of the drive shaft (8, 8'), for the form-fit engagement in a corresponding coupling element (15) of a motor shaft (14) of the drive motor (20).

7. The system as claimed in one of the preceding claims, wherein the approach bevel (23) is formed closed at the periphery and/or annular.

8. The system as claimed in claim 1, wherein the replacement means comprises a robot arm.

9. The system as claimed in claim 1, wherein the motor shaft (14) is elastically mounted.

## Revendications

1. Système composé d'un mandrin de serrage (1, 1') pour enserrer des pièces ou des outils dans un espace d'enserrage (21) avec une force de serrage (F) et un moteur d'entraînement (20) ainsi qu'un dispositif de changement pour changer le mandrin de serrage (1, 1'), le mandrin de serrage (1, 1') comprenant :
- au moins deux mâchoires de serrage (2, 2') mobiles en translation le long d'un plan d'enserrage (E) en direction d'un centre Z de l'espace d'enserrage (21),
- dans lequel l'espace d'enserrage (21) est formé par des faces avant (2s, 2s') des mâchoires de serrage (2, 2') et
- une transmission purement mécanique disposée au moins en majeure partie à l'intérieur du mandrin de serrage (1) pour transmettre un couple d'entraînement du moteur d'entraînement (20), pouvant être couplé à la transmission par des moyens de couplage de la transmission, sur les mâchoires de serrage (2, 2') pour déplacer les mâchoires de serrage (2, 2'),
dans lequel l'espace d'enserrage (21) est mobile de la taille maximale de l'espace d'enserrage (21) à la taille minimale de l'espace d'enserrage (21) rien que par le moteur d'entraînement (20) et le mouvement exécuté par le moteur d'entraînement (20) par le biais de la transmission, **caractérisé en ce que** les moyens de couplage peuvent être couplés de façon automatisée avec un raccord de couplage correspondant du moteur d'entraînement (20),
dans lequel les moyens de couplage présentent des moyens d'alignement mécaniques sous forme d'une surface oblique (23) entourant l'arbre d'entraînement (8) pour l'alignement automatique lors du couplage du mandrin de serrage (1) avec le moteur d'entraînement (20), dans lequel la surface oblique (23) agit avec une surface oblique (25) correspondante du raccord de couplage du
moteur d'entraînement (20) sous forme d'une liaison rainure-languette lors du couplage.

2. Système selon la revendication 1, dans lequel les moyens de couplage, en particulier purement à complémentarité de formes, en particulier le mandrin de serrage (1, 1'), sont conçus purement mécaniques.

3. Système selon l'une des revendications précédentes, dans lequel un diamètre d'ouverture (D) entre au moins deux des mâchoires de serrage (2, 2') est réglable par le biais du moteur d'entraînement conçu en particulier en tant que servomoteur.

4. Système selon l'une des revendications précédentes, dans lequel la force de serrage (F) est réglable directement par le biais du moteur d'entraînement (20) conçu en particulier en tant que servomoteur.

5. Système selon l'une des revendications précédentes, dans lequel l'espace d'enserrage (21) est prévu sur une face avant (1v, 1v') du mandrin de serrage (1, 1') et les moyens de couplage sont prévus sur une face arrière (1r) du mandrin de serrage (1, 1') détournée de la face avant (1v, 1v').

6. Système selon l'une des revendications précédentes, dans lequel les moyens de couplage présentent un arbre d'entraînement (8, 8') disposé en particulier à suspension, avec un élément de couplage agissant par complémentarité de formes reposant sur la face arrière (1r), en particulier une denture intérieure (11) prévue sur le côté entraînement de l'arbre d'entraînement (8, 8'), pour la mise en prise par complémentarité de formes dans un élément de couplage correspondant (15) d'un arbre de moteur (14) du moteur d'entraînement (20).

7. Système selon l'une des revendications précédentes, dans lequel la surface oblique (23) est formée en particulier fermée sur le pourtour et/ou annulaire.

8. Système selon la revendication 1, dans lequel le dispositif de changement est un bras de robot.

9. Système selon la revendication 1, dans lequel l'arbre de moteur (14) est disposé à suspension.
